Europäisches Patentamt

**European Patent Office**

Office européen des brevets

(11) Publication number: **0 231 069 B1**

## EUROPEAN PATENT SPECIFICATION

(45) Date of publication of patent specification: **03.04.91**

(51) Int. Cl.5: **F16H 3/08, B60K 17/08**

(21) Application number: **87300234.9**

(22) Date of filing: **12.01.87**

(54) Creeper speed mechanism for tractor transmission.

(30) Priority: **13.01.86 US 818509**

(43) Date of publication of application:
**05.08.87 Bulletin 87/32**

(45) Publication of the grant of the patent:
**03.04.91 Bulletin 91/14**

(84) Designated Contracting States:
**BE DE FR GB NL**

(56) References cited:
**DE-A- 1 950 914**
**DE-A- 2 410 164**
**GB-A- 2 063 395**
**US-A- 3 906 817**

(73) Proprietor: **FORD MOTOR COMPANY LIMITED**
**Eagle Way**
**Brentwood Essex CM13 3BW(GB)GB**

Proprietor: **FORD-WERKE AKTIENGESELL-SCHAFT**
**Werk Köln-Niehl Henry-Ford-Strasse Postfach 60 40 02**
**W-5000 Köln 60(DE)DE**

Proprietor: **FORD FRANCE SOCIETE AN-ONYME**
**344 Avenue Napoléon Bonaparte B.P. 307**
**F-92506 Rueil Malmaison Cedex(FR)FR**

Proprietor: **Ford Motor Company**
**One Parklane Boulevard Parklane Towers East**
**Dearborn Michigan 48126(US)BE NL**

(72) Inventor: **Beim, Rudolf**
**19760 Fall River**
**Southfield Michigan 48076(US)**

(74) Representative: **Messulam, Alec Moses et al**
**A. Messulam & Co. 24 Broadway**
**Leigh on Sea Essex SS9 1BN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a multiple speed ratio trasctor transmission. More particularly, the invention pertains to a dual power mechanism and to a creeper speed mechanism for producing an extraordinarily large gear ratio.

Tractor transmissions are designed to produce a larger number of gear ratios within a mechanism located between the engine and the final drive or differential mechanism. In the conventional design, the gear arrangement of the transmission may produce a gear reduction or ratio of approximately 9:l between the speed of the transmission output and the engine speed. Typically, the torque delivery path of a tractor transmission includes a creeper speed mechanism located behind the transmission gear arrangement and before the differential mechanism. The creeper speed mechanism produces an additional speed reduction of about 5:l between the output of the transmission gear arrangement and the output of the creeper speed mechanism. This combination of speed ratios will produce an overall speed reduction of approximately 45:l between the output of the creeper speed mechanism and the engine.

Because the creeper speed mechanism is an additional gear mechanism located in conventional tractor drivelines at the rear of the transmission, its presence increases the overall length of the transmission. It is preferable that the creeper speed mechanism be as short as possible so that the transmission can be fitted within the smallest space possible. Yet to produce a sufficiently large speed reduction between the engine and the transmission output required by tractor operators for certain conditions, the creeper speed mechanism must include several speed reductions which necessarily increase the space required by the mechanism.

DE-A-2,410,164 discloses a change gear transmission which comprises a group transmission that precedes a main control group and in which the input shaft is driven by a driving engine through the intervention of an engageable and disengageable driving clutch and in which said change gear transmission includes two control stages, each of which is adapted to be engaged and disengaged by a friction clutch.

According to the invention there is provided a a tractor transmission comprising a first shaft which is clutched to the engine, a transmission input shaft, creeper speed reduction means, first and second clutch means for selectively, driveably connecting the first shaft to the respective outputs of the first and second clutch means and speed reduction means driveably connected to the output of the first and second clutch means, characterised in that the creeper speed reduction means is driveably connected to the first speed reduction means, and the transmission further includes means for selectively, driveably connecting the creeper speed reduction means to the transmission input shaft.

The clutches are engaged selectively by connecting a source of pressurized fluid to the respective clutch pistons. When the shift lever of the transmission is moved among the various speed ratios, for example, when the lowest speed ratio is selected by the tractor operator, a hydraulic valve opens communication between one of the clutches and the pressurized fluid source. If a higher speed ratio is required, movement of the shift selector to the higher gear ratio closes the connection to the first clutch and communicates the fluid pressure source to the second clutch.

The first speed reduction means includes a countershaft rotatably mounted on the transmission casing parallel to the axis of the shaft that is connected to the engine. The counter shaft carries two pinions which turn with the countershaft and are engaged respectively with the output component of the first and second clutches. In addition to these pinions, a third pinion carried on the countershaft is continuously engaged with a creeper gear carried rotatably on the transmission input shaft. This pinion and the creeper gear produce a speed reduction between the countershaft and the input shaft.

The connecting means includes a coupler, slideably mounted on the input shaft, and which moves between a position where the coupler is connected to the creeper gear and another position where the coupler is connected to the output component of one of the clutches. The coupler is continuously, driveably connected to the transmission input shaft. Therefore, movement of the coupler connects either the creeper speed gear or the output component of the clutch to the input shaft.

The gears that are formed integrally with the clutch outputs and the pinions with which they are engaged on the countershaft are sized to produce a torque amplification and speed reduction between the shaft that is connected to the engine and the countershaft. The creeper gear and the pinion with which it is engaged on the countershaft are sized to produce an additional speed reduction and torque application between the countershaft and the transmission input shaft. The output of one of the hydraulically actuated clutches is connected by the coupler directly to the transmission input shaft. When the other hydraulic clutch is actuated and the coupler is positioned other than for creeper operation, the transmission input shaft is overdriven with respect to the engine shaft. However, when the coupler is moved into engagement with the creeper gear, the output of the first clutch drives a pinion on the countershaft, which produce a speed reduction. The connection that the coupler makes with the creeper gear produces a second speed reduction between the speed of the countershaft and the transmission input shaft.

When the coupler is located at the normal drive position, the transmission input shaft is either over-driven with respect to the engine speed or it is directly connected to the engine. Otherwise, when the coupler is positioned for creeper speed operation, the two speed ratios that result from selective engagement of the first and second clutches and the speed reduction associated with the creeper speed mechanism product two larger speed reductions between the engine and the transmission input shaft.

The invention will now be described further by way of example with reference to the accompanying drawings in which:

Figure I is a cross section through a plane that contains the axes of the engine shaft and transmission input shaft at the fron portion of a tractor transmission according to this invention.

The output shaft of an engine is driveably connected to the power take off shaft I0 of a tractor transmission through a neutral clutch I2. The trans-mission is housed in a casing I4 comprising several segments which are joined at bolted connections I6. A bulkhead or web I8, connected to the casing, supports various shafts, gears, clutches and synchronizers.

A first hydraulically actuated disc clutch as-sembly driveably connects shaft I0 to first and second output components of the clutches. For example, when a first clutch 20 or a second clutch 22 is engaged, shaft I0 is connected to clutch output components 28 or 30, respectively. The input element 24 of the clutches is joined at a spline 26 to shaft I0; their output components 28, 30 are rotatably supported on the shaft and are formed integrally with gears 32, 34, which are in continuous meshing engagement with pinions 36, 38. These pinions are rotatably supperted on coun-tershaft 40, which is substantially parallel to the axis of shaft I0.

Clutch 20 includes a hydraulic cylinder 42 driveably connected to the input component 24, a piston 44, a first set of clutch discs 46 splined to the cylinder 42, a second set cf clutch discs 48 splined to output component 28, a spring retainer 52, a coiled compression spring 50 fitted between the spring retainer and the piston, seals 53, 54 for hydraulically sealing the pressurized portion of the cylinder from the unpressurized portion, and a bearing 56 for rotatably supporting the output com-ponent on shaft I0. The hydraulic system of the transmission connects a source of high pressure hydraulic fluid through a hydraulic passage 58 to the interior of the cylinder. The low pressure portion of the cylinder is connected by passage 60 to a reservoir or sump at atmospheric pressure.

Clutch 22 includes corresponding components to those described with respect to clutch 20 and functions in the same way as clutch 20 when its cylinder is pressurized through passage 62 from the source of hydraulic pressure. Clutches 20 and 22 are operated alternately; they are not fully engaged concurrent during any of the forward drive, reverse drive or creeper speed ratio conditions.

When clutch 20 is energized, its cylinder is pressurized and the clutch discs 46, splined to the cylinder, are forced into frictional contact with discs 48, splined on the output component 28. When the pressure in the cylinder rises sufficiently, the input component 24 is driveably connected to the output component 28 and driveably connects shaft I0 and gear 32. Similarly, when clutch 22 is pressurized, a driveable connection is made through engagement of the corresponding disc sets between shaft I0 and gear 34.

Pinion 36 is formed integrally with countershaft 40, and pinions 38, 66 are connected by spline 64 to the countershaft. Pinion 66 is in continuous engagement with creeper gear 68, which is rotatably mounted by bearing 70 on the outer surface of the transmission input shaft 72. Shaft I0, the power takeoff shaft, extends from the front of the transmission to the rear through a bore in shaft 72. The gear wheel on which creeper gear 68 is formed includes a set of dog teeth 74 engageable by a corresponding set of dog teeth 76 located on the circumference of a coupler 78. Located at the forward end of the input shaft is a set of splines 80, with which the splines 82 on the inside diameter of coupler 78 are continuously engaged. Located at the rearward end of the output component 30 of clutch 22 is a set of dog teeth 84, which is engageable by the splines 82 of the coupler. The coupler is mounted for axial sliding movement on the input shaft and remains continuously engaged with the input shaft.

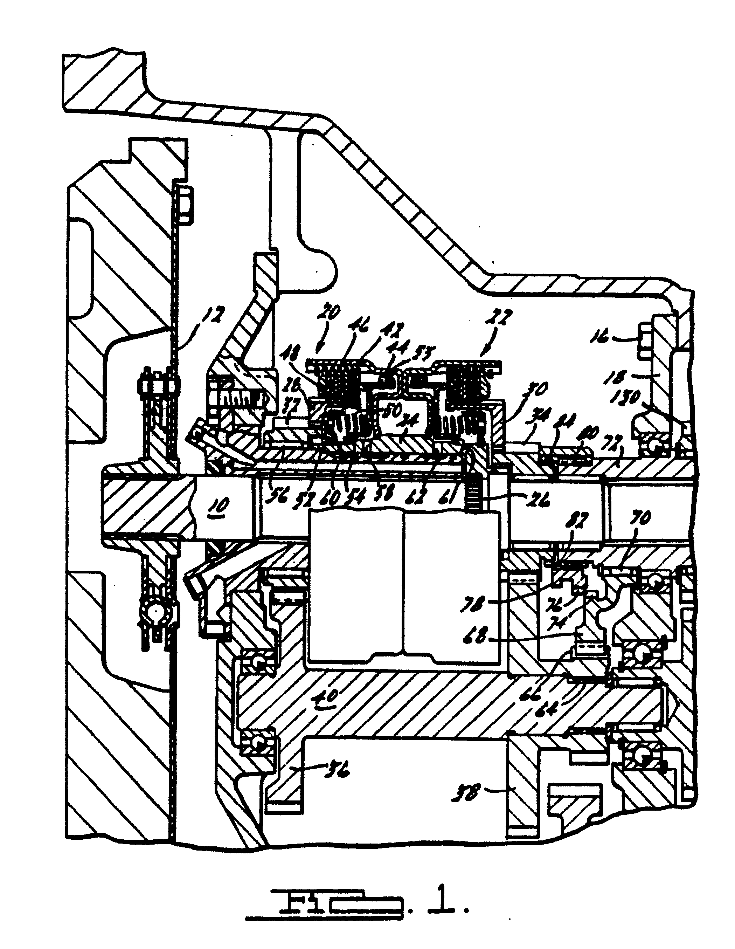

When coupler 78 is moved rearward from the neutral position shown in the figure, it is brought into driveable engagement with creeper gear 68. When the coupler is moved forward from the neutral position, it is brought into driveable engagement with the output component of clutch 22.

The device embodying to this invention will produce, through selective operation of clutches 20 and 22, a dual power input between the engine shaft and the input shaft 72 of the transmission. When clutch 20 is engaged, clutch 22 is disengaged, coupler 78 is moved forward to its normal position, and output shaft 72 is overdriven with respect to the engine, i.e., the speed of shaft 72 is greater than the engine speed. When the clutches and coupler are so disposed, power is transmitted from power takeoff shaft 10 through clutch 20, gear 32, pinion 36, spline 64, pinion 38, gear 34 and coupler 78 to the input shaft 72. The relative sizes of the meshing gears and pinions 32, 40 and 38, 34 cause input shaft 72 to be overdriven approximately 1.6 times the speed of shaft 10.

When clutch 22 is engaged, clutch 20 is disengaged and coupler 78 is moved forward to its normal position, shaft 10 is connected to the input shaft 72 through the torque delivery path that includes spline 26, the discs of clutch 22, output component 30 and coupler 78. This torque delivery path causes the input shaft 72 to be driven at the speed of shaft 10.

The dual power input mechanism connects the engine through clutches 20 and 22 either directly to the transmission input or through the speed reduction gearset to the transmission input. However, in addition to the dual power input, the creeper mechanism according to this invention has the capacity to produce a speed reduction between the engine and the transmission input by moving the coupler rearward from the position of engagement with the output of clutch 22 and into engagement with creeper gear 68. When this is done, selective engagement of clutches 20 and 22 produces two ratios of the speed of the input shaft with respect to the engine shaft.

The creeper speed mechanism produces the higher creeper speed ratio or the lower torque ratio when clutch 20 is engaged, clutch 22 is disengaged and coupler 78 is moved rearward to the creeper speed position. With these components so disposed, the torque delivery path between shaft 10 and input shaft 72 includes clutch 20, gear 32, pinion 36, creeper pinion 66, creeper gear 68, dog teeth 74, 76 and coupler 78.

The creeper speed mechanism produces the lower creeper speed ratio or the higher torque ratio when clutch 20 is disengaged, clutch 22 is engaged and coupler 78 is moved rearward to bring its dog teeth 76 into engagement with the the dog teeth 74 on the creeper gear wheel 68. With these components so disposed, the torque delivery path that connects shaft 10 to shaft 72 includes clutch 22, gear 34, pinion 38, creeper pinion 66, creeper gear 68, dog teeth 74, 76, and coupler 78.

From the relative sizes of the engaged gears and pinions of this torque path, it can readily be seen that the speed of input shaft 72 is substantially slower than the engine speed. From the relative sizes of the engaged gears and pinions of the other torque path, the input shaft speed is seen to be higher than its speed when clutch 22 is engaged and clutch 20 is disengaged, for a constant engine speed.

## Claims

1. A tractor transmission comprising a first shaft (10) which is clutched to the engine, a transmission input shaft (72), creeper speed reduction means (68), first and second clutch means (20,22) for selectively, driveably connecting the first shaft (10) to the respective outputs of the first and second clutch means (20,22), and first speed reduction means (36,38,40,66) driveably connected to the output of the first and second clutch means (20,22), characterised in that the creeper speed reduction means (68) is driveably connected to the first speed reduction means (36,38,40,66), and the transmission further includes means (78) for selectively, driveably connecting the creeper speed reduction means (68) to the transmission input shaft (72).

2. A tractor transmission according to Claim 1, wherein the connecting means (78) selectively, driveably connects the output of the second clutch means (22) to the transmission input shaft (72).

3. A tractor transmission according to Claim 1 or 2, wherein the first speed reduction means (36,38,40,66) includes a countershaft (40) mounted for rotation parallel to the first shaft (10), carrying a first pinion (36) in meshing engagement with the output of the first clutch means (20) and a second pinion (66) driveably connected to the creeper speed reduction means (68), said first and second pinions (36,66) being rotatably fixed to the countershaft (40).

4. A tractor transmission according to Claim 3, wherein the first speed reduction means (36,38,40,66) further includes a third pinion (38) carried on the countershaft (40) in meshing engagement with the output of the second clutch means (22) and driveably connected to the second pinion (66).

## Revendications

1. Transmission pour tracteur, comprenant un premier arbre (10) en prise embrayée avec le moteur ; un arbre d'entrée de transmission (72) ; un moyen patinant (68) réducteur de vitesse ; des premier et second embrayages (20, 22) pour établir, sélectivement, une liaison d'entraînement entre le premier arbre (10) et les sorties respectives des premier et second embrayages (20, 22) ; et un premier moyen (36, 38, 40, 66) réducteur de vitesse, en liaison d'entraînement avec la sortie des premier et second embrayages (20, 22), caractérisée par le fait que le moyen patinant (68) réducteur de vitesse est en liaison d'entraînement avec le premier moyen (36, 38, 40, 66) réducteur de vitesse, et la transmission présente par ailleurs un moyen (78) pour établir, sélectivement, une liaison d'entraînement entre le moyen patinant (68) réducteur de vitesse et l'arbre d'entrée (72) de la transmission.

2. Transmission pour tracteur selon la revendication 1, dans laquelle le moyen de liaison (78) établit, sélectivement, une liaison d'entraînement entre la sortie du second embrayage (22) et l'arbre d'entrée (72) de la transmission.

3. Transmission pour tracteur selon la revendication 1 ou 2, dans laquelle le premier moyen (36, 38, 40, 66) réducteur de vitesse présente un arbre de renvoi (40) monté à rotation parallèlement au premier arbre (10), portant un premier pignon (36) en prise d'engrènement avec la sortie du premier embrayage (20), et un deuxième pignon (66) en liaison d'entraînement avec le moyen patinant (68) réducteur de vitesse, lesdits premier et deuxième pignons (36, 66) étant verrouillés en rotation à l'arbre de renvoi (40).

4. Transmission pour tracteur selon la revendication 3, dans laquelle le premier moyen (36, 38, 40, 66) réducteur de vitesse présente, en outre, un troisième pignon (38) calé sur l'arbre de renvoi (40), en prise d'engrènement avec la sortie du second embrayage (22) et en liaison d'entraînement avec le deuxième pignon (66).

## Ansprüche

1. Zugmaschinengetriebe mit einer mit dem Motor verkuppelten ersten Welle (10), einer Getriebeeingangswelle (72), einem Kriechgangverringerungsmittel (68), einem ersten und zweiten Kupplungsmittel (20, 22), um die erste Welle (10) gezielt mit den jeweiligen Ausgängen des ersten und zweiten Kupplungsmittels (20, 22) in Antriebsverbindung zu bringen, und mit einem ersten Drehzahlverringerungsmittel (36, 38, 40, 66), das mit dem Ausgang des ersten und zweiten Kupplungsmittels (20, 22) in Antriebsverbindung steht, dadurch gekennzeichnet, daß das Kriechgangverringerungsmittel (68) mit dem ersten Drehzahlverringerungsmittel (36, 38, 40, 66) in Antriebsverbindung steht und das Getriebe weiterhin ein Mittel (78) einschließt, um das Kriechgangverringerungsmittel (68) gezielt mit der Getriebeeingangswelle (72) in Antriebsverbindung zu bringen.

2. Zugmaschinengetriebe nach Anspruch 1, bei dem das Verbindungsmittel (78) den Ausgang des zweiten Kupplungsmittels (22) gezielt mit der Getriebeeingangswelle (72) in Antriebsverbindung bringt.

3. Zugmaschinengetriebe nach Anspruch 1 oder 2, bei dem das erste Drehzahlverringerungsmittel (36, 38, 40, 66) eine Nebenwelle (40) einschließt, die rotationsmäßig parallel zur ersten Welle (10) angeordnet ist und ein erstes Ritzel (36), das mit dem Ausgang des ersten Kupplungsmittels (20) kämmt, und ein zweites Ritzel (66) trägt, das mit dem Kriechgangverringerungsmittel (68) in Antriebsverbindung steht, wobei jenes erste und zweite Ritzel (36, 66) rotationsmäßig an der Nebenwelle (40) befestigt ist.

4. Zugmaschinengetriebe nach Anspruch 3, bei dem das erste Drehzahlverringerungsmittel (36, 38, 40, 66) weiterhin ein drittes Ritzel (38) auf der Nebenwelle (40) einschließt, das mit dem Ausgang des zweiten Kupplungsmittels (22) kämmt und mit dem zweiten Ritzel (66) in Antriebsverbindung steht.

_FIG. 1._